Europäisches Patentamt

(19) European Patent Office

Office européen des brevets

(11) Publication number : **0 358 354 B1**

(12) **EUROPEAN PATENT SPECIFICATION**

(45) Date of publication of patent specification :
**30.09.92 Bulletin 92/40**

(51) Int. Cl.⁵ : **B65G 53/30, G21C 19/38**

(21) Application number : **89308310.5**

(22) Date of filing : **16.08.89**

(54) **Pulsed transporter.**

(30) Priority : **09.09.88 GB 8821190**

(43) Date of publication of application :
**14.03.90 Bulletin 90/11**

(45) Publication of the grant of the patent :
**30.09.92 Bulletin 92/40**

(84) Designated Contracting States :
**DE FR GB**

(56) References cited :
**GB-A- 971 188**
**GB-A- 2 027 131**
**US-A- 4 451 183**

(73) Proprietor : **UNITED KINGDOM ATOMIC
ENERGY AUTHORITY
Harwell Laboratory
Oxfordshire OX11 0RA (GB)**

(72) Inventor : **Hodgson, Thomas David
9 Loddon Close
Abingdon Oxfordshire (GB)**
Inventor : **Jordan, Tony William James
5 Wallingford Road
Cholsey Oxfordshire (GB)**

(74) Representative : **Mansfield, Peter Turquand et
al
United Kingdom Atomic Energy Authority
Patents Department Building 329 Harwell
Laboratory
Oxfordshire, OX11 0RA (GB)**

## Description

This invention relates to an apparatus for transporting objects, in which the objects are transported by a liquid which is pulsed at intervals.

It is known from GB-971 188 that discrete objects from which a component is to be dissolved such as short chopped lengths of nuclear fuel pins from which the fuel is to be dissolved can be subjected to a solvent in a dissolver apparatus consisting of a collecting box and two upwardly extending ducts full of solvent liquid, the objects collecting in the box to define a free surface; pulses of solvent injected through a grid into the box disturb objects near the surface so the objects are-carried by a pulsating flow of solvent along one of the ducts. A flow of liquid is essential to transport the objects. GB 2 027 131B describes a dissolver apparatus for the same purpose consisting of several V-shaped ducts interconnected in series. Pulses of liquid supplied to the bases of the V-ducts cause the objects to be transported through the apparatus from one such V-duct to the next. The preferred arrangement is to supply the pulse through a grid at the bottom of the V-duct. In one case however the pulse is supplied through a grid at one side of the base, from a duct of diameter the same as the V-duct. It has been found that such a side-entry is not as efficient at causing transport of the discrete objects as is the bottom-entry, as a large amount of solvent is transported along with the discrete objects. The use of a grid is also disadvantageous, as small objects may become jammed in it, and it may become worn and hence need replacing.

According to the present invention there is provided an apparatus for transporting discrete objects, comprising a generally V-shaped duct adapted to contain a transporting liquid and comprising a declivitous inlet portion defining at its upper end an inlet opening for receiving the objects to be transported, an acclivitous outlet portion connected to the inlet portion by a base portion below the inlet opening, the outlet portion defining a discharge opening above the base portion through which the objects are discharged from the apparatus during operation, a liquid displacement duct connected to the base portion of the V-shaped duct, and means for applying at intervals a pressure pulse to liquid in the liquid displacement duct so as to displace liquid into the base portion and so to raise the liquid level rapidly in the inlet and the outlet portions from a level near the base portion to a higher level, characterised by the liquid displacement duct being connected directly to the base portion above the bottom thereof with no grid at the connection to the base portion, and the liquid displacement duct in the vicinity of the said connection being oriented, or profiled, or incorporating a baffle, such that the liquid flow arising from the pressure pulse generates a circumferential swirling of the liquid within the base portion.

By connecting the displacement duct directly to the base portion rather than through a grid, the problems associated with a grid are eliminated. The circumferential swirling of the liquid (and hence also the objects) in the base portion increases the proportion of the pulse energy used to expand the bed of objects and so ensures that objects in the outlet portion are raised, and emerge from the discharge opening with little or no transporting liquid associated with them.

Preferably the displacement duct is of smaller diameter than the V-shaped duct and is connected to it near the bottom of one side of the base portion. The displacement duct may incorporate a baffle arranged to direct the pulse liquid tangentially into the base portion, or may be profiled to direct the liquid this way.

The transporting liquid may be a process liquid to which the objects are to be subjected. For example if the objects are chopped nuclear fuel pins the liquid may be an acid for dissolving out the nuclear fuel materials from the hulls (chopped pieces of fuel cans). In such a case it may be desirable to arrange a plurality of the transporting apparatuses in series with each other, so the objects pass through each in turn.

The invention also provides a method for transporting discrete objects comprising the operations of containing a transporting liquid in a generally V-shaped duct having declivitous and acclivitous portions joined by a base portion, feeding the objects through an inlet opening into the declivitous duct portion, and discharging the objects from the acclivitous duct portion through a discharge opening by periodically raising the liquid level rapidly upwards by injecting a pulse of liquid into the base portion above the bottom thereof in such a manner as to generate a circumferential swirling in the liquid within the base portion.

The invention will now be further described by way of example only and with reference to the accompanying drawings, in which:

Figure 1 shows a side view of a single stage of a multi-stage dissolver plant for processing nuclear fuel (in the direction of arrow B in Figure 2);

Figure 2 shows a view in the direction of arrow A in Figure 1;

Figure 3 shows a side view of a modification of the stage of Figure 1; and

Figure 4 shows a side view of another modification to the stage of Figure 1.

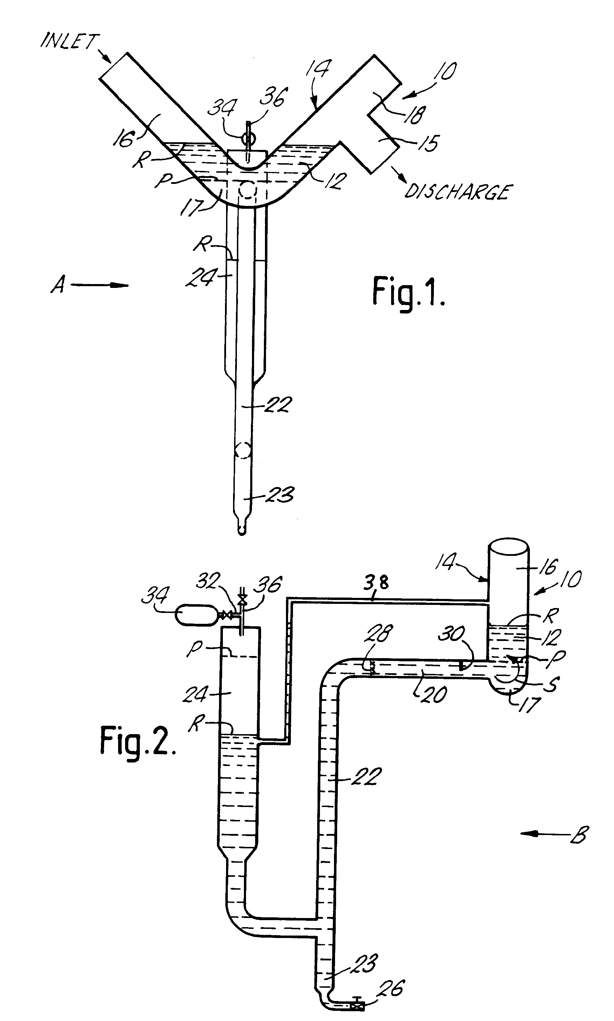

Referring to Figures 1 and 2, there is shown one stage 10 of a multi-stage dissolver plant for treating chopped pieces about 50 mm long of nuclear fuel pins with nitric acid 12, in order to dissolve out nuclear fuel and fission products and leave the hulls. The stage 10 includes a V-shaped duct 14 open at each end, with an open ended discharge duct 15 at one side; the V-duct 14 consists of a downward-sloping inlet portion 16, a curved base portion 17, and an upward-sloping outlet portion 18 communicating with the discharge duct 15, all of diameter 225 mm. Near the bottom of one side of the base portion 17 a horizontal side duct 20 of diameter 100 mm communicates with the V-duct 14, the side duct 20 communicating via a duct 22 with a pulse limb 24 also of diameter 225 mm which is mostly below the level of the base portion 17. The lower end 23 of the duct 22 acts as a sump, and is provided with a drain valve 26. The side duct 20 is provided with a coarse grid 28 to ensure chopped hulls cannot fall into the sump 23, and with a baffle 30 near the base portion 17 which deflects liquid flowing out of the side duct 20 towards the bottom surface of the base portion 17. At the top of the pulse limb 24 is a branched pipe, one branch 32 connected to a supply 34 of compressed air, and the other being a vent pipe 36 with a valve.

In operation of the stage 10, chopped pieces of fuel pins are supplied to the V-duct 14 via the inlet portion 16, and slide down into the base portion 17 and partly into the outlet portion 18. The gas pressure in the pulse limb 24 is held above atmospheric, so the levels of the nitric acid are as shown (marked R), and so most of the chopped pieces in the V-duct 14 are therefore immersed. At intervals of about 10 minutes the vent pipe 36 is opened so the nitric acid drops back to the level (marked P) of the top of the side duct 20, then the vent pipe 36 is closed, and the compressed air supply 34 applied to send a pulse of liquid out of the side duct 20 into the V-duct 14, and to raise the liquid level in the V-duct 14 rapidly back to the level marked R. Because of the baffle 30 the inflowing liquid swirls around the circumference of the base portion 17 (arrow S), causing the hulls to swirl similarly, and at the same time the hulls in the outlet portion 18 are pushed upward by the rising liquid, to emerge through the discharge duct 15. It will be appreciated that the discharge duct 15 may supply the hulls to the inlet of another stage.

A narrow by-pass pipe 38 is also provided (not shown in Figure 1 for clarity), communicating with the pulse limb 24 just below the level R, and at its other end communicating with the inlet portion 16 of the V-duct 14 well above the level R. This pipe 38 allows any gas or vapour which finds its way into the pulse limb 24 (for example due to leakage from the compressed air supply 34, or generated by the acid 12) to escape into the V-duct 14, and so prevents the liquid level in the pulse limb 24 being depressed lower than the level of the pipe 38, which would otherwise lead to liquid overflowing into the discharge duct 15. The pipe 38 also ensures a certain amount of recirculation occurs between the acid 12 in the pulse limb 24 and the V-duct 14, as gas and vapour bubbles escaping through the pipe 38 entrain liquid with them.

The stage 10 described above enables the chopped pieces of fuel pin and/or hulls to be subjected to nitric acid, and also enables them to be transported from one stage to the next, whilst requiring no moving parts exposed to either the chopped pieces or the acid. Very little acid need be transported with the chopped pieces out of the discharge duct 15: over several pulses the average mass of hulls transported has been measured as 530 grams, while the associated liquid was only 9 grams on average.

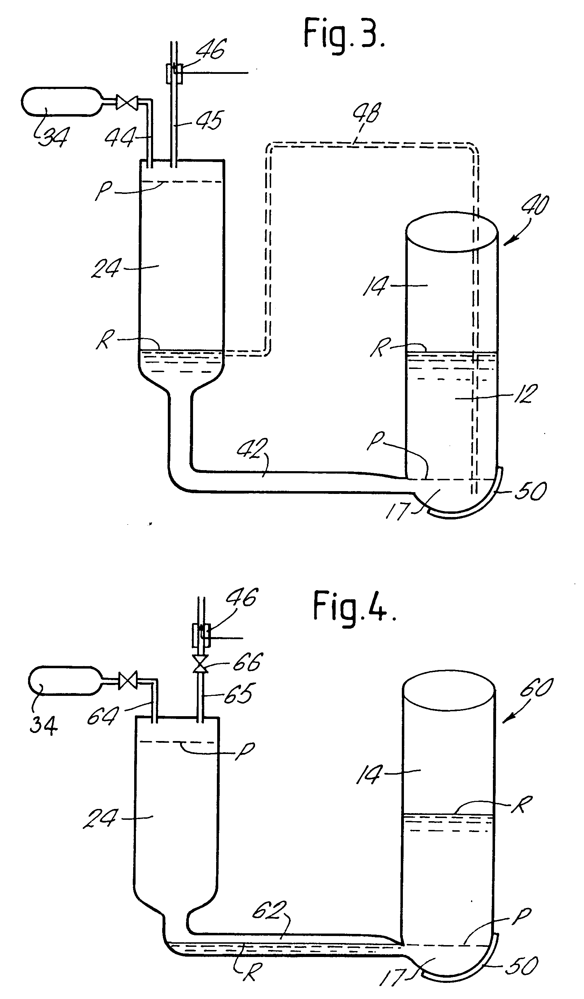

Referring to Figure 3 there is shown a modified version 40 of the stage 10 of Figures 1 and 2, identical components being referred by the same reference numbers. The stage 40 consists of a V-duct 14 and a pulse limb 24, but in this case the pulse limb 24 is somewhat higher than the V-duct 14. A cross duct 42 communicates between the bottom of the pulse limb 24 and the side of the base portion 17 of the V-duct, and is profiled near the base portion 17 so as to deflect liquid flowing out of the cross duct 42 towards the bottom surface of the base portion 17. Two pipes 44 and 45 communicate with the top of the pulse limb, one connected to a source 34 of compressed air, and the other to an ejector 46.

In operation the normal liquid level R is the same in both the V-duct 14 and the pulse limb 24, so the pulse limb is not pressurised. At intervals air is extracted from the pulse limb 24 by the ejector 46, raising the liquid level in the pulse limb 24 by about one metre to that marked P, and lowering the liquid level in the V-duct 14 to just above the cross duct 42, marked P; compressed air is then supplied by the source 34 to force the liquid level in the pulse limb 24 back down to the level R, sending a pulse of liquid into the V-duct 14. As described in relation to the stage 10 of Figures 1 and 2, the inflowing liquid swirls around the circumference of the base portion 17, and the hulls are pushed up the outlet portion 18 to emerge through the discharge duct 15.

If recirculation of the acid 12 between the pulse limb 24 and the V-duct 14 is desired, a by-pass pipe 48 may be provided (shown in broken line) communicating between the pulse limb 24 just below the level R and the V-duct 14 near the bottom of the base portion 17. This also will ensure the pulse does not exceed the desired amplitude. If it is desired to heat the acid 12, this is preferably done by means of a heating jacket 50 around at least part of the V-duct 14. It will be appreciated that the base portion 17 will act as the sump of the stage 40, so that hulls and fines will pass through the stage 40 together.

Referring to Figure 4, there is shown another modified version 60 of the stage 10 of Figures 1 and 2, identical components again being referred to by the same reference numerals. The stage 60 consists of a V-duct 14 and a pulse limb 24, which in this case are at about the same level. A cross duct 62 communicates between the bottom of the pulse limb 24 and the side of the base portion 17 of the V-duct, being profiled like the cross duct 42 of Figure 3. Two pipes 64 and 65 communicate with the top of the pulse limb 24, one connected to a source 34 of compressed air, the other connected via a valve 66 to an ejector 46.

In operation the valve 66 is closed and the pulse limb 24 is pressurized, so the normal liquid level R is just below the bottom of the pulse limb 24, in the cross duct 62. At intervals of say every ten minutes the valve 66 is opened and the ejector 46 operated to lower the pressure in the pulse limb 24 and to lower the liquid level in the V-duct 14 to just above the cross duct 62 (marked P); compressed air is then supplied to push the liquid level in the pulse limb 24 rapidly back down to the level marked R. (Preferably the valve 66 is shut before the compressed air is supplied, though this may not be necessary). As in the previously-described embodiments, the pulse of liquid swirls around the base portion 17, the liquid level in the V-duct 14 rises rapidly, and hulls are transported up to the discharge duct 15.

It will be appreciated that in this case substantially all the acid in the stage 60 is transferred between the pulse limb 24 and the V-duct 14 during a pulse, so that no recirculation is necessary, and that no by-pass is required to ensure the pulse does not exceed its desired amplitude as the cross-duct 62 itself performs that role.

It will be further appreciated that other modifications may be made to the apparatuses described while remaining within the scope of the invention. For example the cross duct 42 or 62 might slope downwardly towards the V-duct 14 instead of being horizontal, and might be profiled in a different manner to that shown.

The apparatus described may also be used to dry hulls or other objects, no liquid being provided, a steady flow of drying gas being passed through the V-shaped duct 14, and the objects being transported in a similar manner to that described above by supplying a pulse of air through the side duct 20.

## Claims

1. An apparatus for transporting discrete objects, comprising a generally V-shaped duct (14) adapted to contain a transporting liquid (12) and comprising a declivitous inlet portion (16) defining at its upper end an inlet opening for receiving the objects to be transported, an acclivitous outlet portion (18) connected to the inlet portion by a base portion (17) below the inlet opening, the outlet portion defining a discharge opening (15) above the base portion through which the objects are discharged from the apparatus during operation, a liquid displacement duct (20) connected to the base portion (17) of the V-shaped duct (14), and means (34) for applying at intervals a pressure pulse to liquid in the liquid displacement duct so as to displace liquid into the base portion and so to raise the liquid level rapidly in the inlet and the outlet portions from a level (P) near the base portion to a higher level (R), characterised by the liquid displacement duct (20) being connected directly to the base portion (17) above the bottom thereof with no grid at the connection to the base portion (17), and the liquid displacement duct (20) in the vicinity of the said connection being oriented or profiled, or incorporating a baffle (30), such that the liquid flow arising from the pressure pulse generates a circumferential swirling (S) of the liquid (12) within the base portion.

2. An apparatus as claimed in Claim 1 wherein the displacement duct (20) is of smaller diameter than the V-shaped duct (14) and is connected to it near the bottom of one side of the base portion (17).

3. An apparatus as claimed in Claim 1 or Claim 2 wherein the displacement duct (20) incorporates a baffle (30) arranged to enhance the circumferential swirling of the liquid within the base portion (17).

4. An apparatus as claimed in Claim 1 or Claim 2 wherein the displacement duct (42,62) is profiled so as to enhance the circumferential swirling of the liquid within the base portion (17).

5. An apparatus as claimed in Claim 1 wherein the liquid displacement duct (20, 42, 62) communicates with a reservoir (24) for the liquid of larger diameter than the liquid displacement duct, the pressure pulse applying means (34) being arranged so as to displace liquid from the reservoir (24), through the liquid displacement duct (20, 42, 62), and so into the base portion (17).

6. An apparatus as claimed in Claim 5 wherein the reservoir (24) is substantially at a lower level than the V-shaped duct (14), such that just before application of the pressure pulse the liquid levels (P) can be the same in both the reservoir (24) and the V-shaped duct (14).

7. An apparatus as claimed in Claim 5 wherein the reservoir (24) is at a higher level than the V-shaped duct (14), and the apparatus also comprises pressure reducing means (46) connected to the reservoir (24) for raising the liquid level in the reservoir above that in the V-shaped duct (14) prior to application of the pressure pulse.

8. An apparatus as claimed in Claim 5 wherein the reservoir (24) is substantially at the same level as the V-shaped duct (14), pressure reducing means (46) being connected to the reservoir (24) for raising the liquid level (P) in the reservoir (24) above that in the V-shaped duct (14) prior to application of the pressure pulse, and arranged such that substantially the entire contents of the reservoir (24) can be transferred into the V-shaped duct (14) on application of the pressure pulse.

9. A method for transporting discrete objects comprising the operations of containing a transporting liquid (12) in a generally V-shaped duct (14) having declivitous (16) and acclivitous portions (18) joined by a base portion (17), feeding the objects through an inlet opening into the declivitous duct portion, and discharging the objects from the acclivitous duct portion through a discharge opening (15) by periodically raising the liquid level rapidly upwards by injecting a pulse of liquid into the base portion (17) characterised in that the injection is arranged to occur above the bottom thereof and in such a manner as to generate a circumferential swirling (S) in the liquid (12) within the base portion (17).

**Patentansprüche**

1. Vorrichtung zum Transportieren diskreter Objekte, mit einer im wesentlichen V-förmigen Leitung (14), die zur Aufnahme einer Transportflüssigkeit (12) ausgebildet ist und einen abfallenden Einlaßabschnitt (16) aufweist, an dessen oberem Ende eine Einlaßöffnung zur Aufnahme der zu transportierenden Objekte ausgebildet ist, einen ansteigenden Auslaßabschnitt (18), der über einen Basisabschnitt (17) unterhalb der Einlaßöffnung mit dem Einlaßabschnitt verbunden ist, wobei der Auslaßabschnitt eine Ausgabeöffnung (15) oberhalb des Basisabschnitts ausbildet, durch welche die Objekte von der Vorrichtung in deren Betrieb ausgestoßen werden, eine Flüssigkeitsverschiebungsleitung (20), die mit dem Basisabschnitt (17) der V-förmigen Leitung (14) verbunden ist, und eine Einrichtung (34), um in Intervallen einen Druckimpuls auf Flüssigkeit in der Flüssigkeitsverschiebungsleitung auszuüben, um so Flüssigkeit in den Basisabschnitt zu verschieben und derart den Flüssigkeitspegel schnell in dem Einlaß- und Auslaßabschnitt von einem Pegel (P) nahe dem Basisabschnitt auf einen höheren Pegel (R) anzuheben, dadurch **gekennzeichnet**, daß die Flüssigkeitsverschiebungsleitung (20) direkt mit dem Basisabschnitt (17) oberhalb deren Boden verbunden ist, wobei kein Gitter an der Verbindung mit dem Basisabschnitt (17) vorgesehen ist, und daß die Flüssigkeitsverschiebungsleitung (20) in der Nähe dieser Verbindung so orientiert oder profiliert ist, oder ein Leitblech (30) aufweist, da der von dem Druckimpuls herrührende Flüssigkeitsfluß einen Umfangswirbel (S) der Flüssigkeit (12) innerhalb des Basisabschnitts erzeugt.

2. Vorrichtung nach Anspruch 1, bei welcher die Verschiebungsleitung (20) einen kleineren Durchmesser als die V-förmige Leitung (14) aufweist, und mit dieser nahe dem Boden einer Seite des Basisabschnitts (17) verbunden ist.

3. Vorrichtung nach Anspruch 1 oder Anspruch 2, bei welcher die Verschiebungsleitung (20) ein Leitblech (30) aufweist, welches so angeordnet ist, daß es den Umfangswirbel der Flüssigkeit innerhalb des Basisabschnitts (17) vergrößert.

4. Vorrichtung nach Anspruch 1 oder Anspruch 2, bei welcher die Verschiebungsleitung (42, 62) so profiliert ist, daß sie den Umfangswirbel der Flüssigkeit innerhalb des Basisabschnitts (17) vergrößert.

5. Vorrichtung nach Anspruch 1, bei welcher die Flüssigkeitsverschiebungsleitung (20, 42, 62) mit einem Behälter (24) für die Flüssigkeit in Verbindung steht, der einen größeren Durchmesser als die Flüssigkeitsverschiebungsleitung aufweist, wobei die Druckimpulsbeaufschlagungseinrichtung (34) so angeordnet ist, daß sie Flüssigkeit von dem Behälter (24) durch die Flüssigkeitsverschiebungsleitung (20, 42, 62) und so schließlich in den Basisabschnitt (17) verschiebt.

6. Vorrichtung nach Anspruch 5, bei welcher der Behälter (24) im wesentlichen auf einem niedrigeren Pegel liegt als die V-förmige Leitung (14), so daß unmittelbar bevor der Beaufschlagung durch den Druckimpuls die Flüssigkeitspegel (P) sowohl in dem Behälter (24) und der V-förmigen Leitung (14) gleich sein können.

7. Vorrichtung nach Anspruch 5, bei welcher der Behälter (24) auf einem höheren Pegel liegt als die V-förmige Leitung (14), und die Vorrichtung weiterhin eine Druckreduziereinrichtung (46) aufweist, die mit dem Behälter (24) verbunden ist, um den Flüssigkeitspegel in dem Behälter über den in der V-förmigen Leitung (14) vor der Beaufschlagung mit dem Druckimpuls anzuheben.

8. Vorrichtung nach Anspruch 5, bei welcher der Behälter (24) im wesentlichen auf demselben Pegel wie die V-förmige Leitung (14) liegt, und eine Druckreduziereinrichtung (46) mit dem Behälter (24) verbunden ist, um den Flüssigkeitspegel (P) in dem Behälter (24) über den in der V-förmigen Leitung (14) vor der Beaufschlagung mit dem Druckimpuls anzuheben, und so angeordnet ist, daß bei Beaufschlagung mit dem Druckimpuls im wesentlichen der gesamte Inhalt des Behälters (24) in die V-förmige Leitung (14) übertragen werden kann.

9. Verfahren zum Transportieren diskreter Objekte, mit den Vorgängen des Aufnehmens einer Transportflüssigkeit (12) in einer im allgemeinen V-förmigen Leitung (14), welche einen abfallenden (16) und einen ansteigenden Abschnitt (18) aufweist, die durch einen Basisabschnitt (17) verbunden sind, der Zuführung der Objekte durch eine Einlaßöffnung in den abfallenden Leitungsabschnitt und Ausstoßen der Objekte aus dem ansteigenden Leitungsabschnitt über eine Abgabeöffnung (15) durch periodische Erhöhung des Flüssigkeitspegels schnell nach oben durch Injizieren eines Flüssigkeitsimpulses in den Basisabschnitt (17), dadurch **gekennzeichnet**, daß die Injektion so ausgebildet ist, daß sie oberhalb des Bodens des Basisabschnitts und auf solche Weise erfolgt, daß ein Umfangswirbel (S) in der Flüssigkeit (12) innerhalb des Basisabschnitts (17) erzeugt wird.

## Revendications

1. Appareil de transport d'objets séparés, comprenant un conduit (14) ayant une forme générale en V et destiné à contenir un liquide (12) de transport, le conduit comprenant une partie d'entrée (16) à inclinaison descendante qui délimite, à son extrémité supérieure, une ouverture d'entrée destinée à recevoir les objets à transporter, une partie de sortie (18) inclinée en direction ascendante, raccordée à la partie d'entrée par une partie de base (17), au-dessous de l'ouverture d'entrée, la partie de sortie délimitant une ouverture d'évacuation (15) disposée au-dessus de la partie de base et par laquelle des objets sont évacués de l'appareil lors du fonctionnement, un conduit (20) de déplacement de liquide raccordé à la partie de base (17) du conduit en V (14), et un dispositif (34) destiné à appliquer, à certains intervalles,-une impulsion de pression au liquide du conduit de déplacement de liquide afin qu'il déplace le liquide vers la partie de base et élève ainsi rapidement le niveau du liquide dans les parties d'entrée et de sortie d'un niveau (P) proche de la partie de base à un niveau plus élevé (R), caractérisé en ce que le conduit (20) de déplacement de liquide est directement raccordé à la partie de base (17) au-dessous de sa partie inférieure, sans grille au raccord à la partie de base (17), et le conduit de déplacement de liquide (20), à proximité de ce raccord, a une orientation ou une configuration ou un déflecteur (30) tel que le courant du liquide dû à l'impulsion de pression crée un tourbillonnement circonférentiel (S) du liquide (12) dans la partie de base.

2. Appareil selon la revendication 1, dans lequel le conduit de déplacement (20) a un diamètre inférieur à celui du conduit en V (14), et il est raccordé à celui-ci près de la partie inférieure d'un côté de la partie de base (17).

3. Appareil selon la revendication 1 ou 2, dans lequel le conduit de déplacement (20) comporte un déflecteur (30) disposé afin qu'il accroisse le tourbillonnement circonférentiel du liquide dans la partie de base (17).

4. Appareil selon la revendication 1 ou 2, dans lequel le conduit de déplacement (42, 62) a une configuration telle qu'il accentue le tourbillonnement circonférentiel du liquide dans la partie de base (17).

5. Appareil selon la revendication 1, dans lequel le conduit de déplacement de liquide (20, 42, 62) communique avec un réservoir (24) de liquide de diamètre supérieur à celui du conduit de déplacement, le dispositif (34) d'application d'une impulsion de pression étant disposé afin qu'il déplace le liquide du réservoir (24) dans le conduit de déplacement de liquide (20, 42, 62) et ainsi dans la partie de base (17).

6. Appareil selon la revendication 5, dans lequel le réservoir (24) a un niveau nettement inférieur à celui du conduit en V (14), afin que, juste avant l'application de l'impulsion de pression, les niveaux (P) de liquide soient les mêmes à la fois dans le réservoir (24) et le conduit en V (14).

7. Appareil selon la revendication 5, dans lequel le réservoir (24) est à un niveau supérieur à celui du conduit en V (14), et l'appareil comporte aussi un dispositif (46) de réduction de pression raccordé au réservoir (24) afin qu'il élève le niveau du liquide dans le réservoir au-dessus de celui dans le conduit en V (14) avant l'application de l'impulsion de pression.

8. Appareil selon la revendication 5, dans lequel le réservoir (24) est pratiquement au même niveau que le conduit en V (14), un dispositif de réduction de pression (46) étant raccordé au réservoir (24) afin qu'il élève le niveau du liquide (P) dans le réservoir (24) au-dessus de celui du conduit en V (14) avant l'application de l'impulsion de pression, et il est disposé afin que la totalité pratiquement du contenu du réservoir (24) puisse être transférée au conduit en V (14) lors de l'application de l'impulsion de pression.

9. Procédé de transport d'objets séparés, comprenant des opérations de disposition d'un liquide de transport (12) dans un conduit (14) ayant une forme générale en V et comprenant des parties inclinées descendante (16) et ascendante (18) raccordées par une partie de base (17), de transmission des objets par une ouverture d'entrée dans la partie descendante de conduit, et d'évacuation des objets de la partie ascendante de conduit par une ouverture d'évacuation (15) par élévation périodique du niveau du liquide rapidement vers le haut par injection d'une impulsion de liquide dans la partie de base (17), caractérisé en ce que l'injection est destinée à être réalisée au-dessus de la partie inférieure et de manière qu'un tourbillonnement circonférentiel (S) soit créé dans le liquide (12) présent dans la partie de base (17).

INLET

34 36 14 10
18
16 15
R
P 12 DISCHARGE
17
R
A 24

Fig.1.

22

23

34 32 36 38 14 16 10
R
P 12
28 30 P
24 S
R 20 17

Fig.2. 22

B

23
26

# Fig.3.

# Fig.4.